# EUROPÄISCHE PATENTANMELDUNG

(11) **EP 3 348 862 A1**
(43) Veröffentlichungstag der Anmeldung: **18.07.2018**
(21) Anmeldenummer: 17151776.6
(22) Anmeldetag: 17.01.2017
(51) Int. Cl.: F16H 7/08, B65G 23/44, G01N 35/04

(54) **RIEMENSPANNERSYSTEM**

(71) Anmelder: Siemens Healthcare Diagnostics Products GmbH, 35041 Marburg (DE)
(72) Erfinder: Kalbfell, Heiko, 65232 Taunusstein (DE)

(57) **Zusammenfassung**

Die Erfindung betrifft ein Riemenspannersystem (2) umfassend eine erste Spannrolle (9), eine zweite Spannrolle (10), ein Verbindungselement (11) und zwei Hebel, wobei die erste und die zweite Spannrolle (9, 10) jeweils um eine Achse (15) drehbar gelagert sind, wobei die Achsen (15) jeweils mit einem der Hebel (12) in Verbindung stehen und die Hebel (12) jeweils um einen Befestigungspunkt (14) schwenkbar sind, und wobei die Hebel (12) über das Verbindungselement (11) miteinander verbunden sind.

## Beschreibung

Die Erfindung liegt auf dem Gebiet der automatischen in vitro-Diagnostiksysteme. Gegenstand der Erfindung umfasst ein Riemenspannersystem zum Spannen von Riemen für Riemenantriebe in einem automatischen Analysegerät sowie ein Verfahren zum Betrieb eines automatischen Analysegeräts mit einem Riemenantrieb.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, umfassen verschiedene Gerätebaugruppen zum Prozessieren der Probe. Beispielsweise werden die benötigten Reagenzien mittels einer Pipettiervorrichtung mit einer Pipettiernadel in eine Messküvette eingefüllt. Die Pipettiervorrichtung wird dabei mittels eines Riemenantriebs automatisch verfahren, der Teil einer Robotorstation ist. Die Messküvette wird mit einer Transportvorrichtung, die z.B. einen Küvettengreifer umfasst, innerhalb des automatischen Analysegerätes zu verschiedenen Positionen ebenfalls mittels eines Riemenantriebs automatisch verfahren. Nach der Messung wird die benutzte Messküvette z.B. zur Entsorgung durch einen Abfallschacht in einen Abfallbehälter verbracht.

Bekannte automatische Analysegeräte umfassen einen Riemenantrieb zum automatischen Verfahren von z.B. einer Transportvorrichtung für eine Küvette oder ein Reagenzgefäß oder einer Pipettiervorrichtung innerhalb des automatischen Analysegerätes. Dabei umfasst der Riemenantrieb einen Riemen, der in Kontakt steht mit der Transportvorrichtung oder der Pipettiervorrichtung. Durch bewegen des Riemens kann die Transportvorrichtung oder die Pipettiervorrichtung entlang eines Weges des Riemens automatisch verfahren werden. Neben solchen automatischen Analysegeräten mit Linearantrieben sind auch automatische Analysegeräte bekannt, bei denen rotatorische Antriebe mittels entsprechender Riemenantriebe bewegt werden können. Dabei wird z.B. eine Runde Platte, auf der sich Flüssigkeitsgefäße befinden, gedreht. Die Drehung wird über eine Welle vermittelt, die mit einem Abtriebsrad eines Riemenantriebs verbunden ist.
Häufig werden die Riemen mit starren Riemenspannern gespannt, die z.B. eine Druckfeder umfassen. Den Riemen wird mittels des Riemenspanners in eine Richtung gespannt und der Riemenantrieb entsprechend in dieser Position mechanisch, z.B. mittels einer Schraube, fixiert. Bei gleichbleibenden Last- und/oder Richtungswechseln ist die Spannung des Riemens in der Regel ausreichend, um ein Überspringen oder Verrutschen des Riemens zu vermeiden und ein ordnungsgemäßes Funktionieren des Riemenantriebs sicherzustellen.

Bei schnelleren, unterschiedlichen Last- und/oder Richtungswechseln der Bewegung des Riemens kann ein starrer Riemenspanner nicht auf die unterschiedliche Dehnung des Riemens reagieren, und es ist nicht sichergestellt, dass der Riemen nicht überspringt oder durchrutscht.

Kommt es zum Überspringen oder Durchrutschen des Riemens, bewirkt dies Positionsfehler der Transportvorrichtung oder der Pipettiervorrichtung, was zu einem unzuverlässigeren Betrieb des Riemenantriebs führt. Dies kann z.B. dazu führen, dass z.B. infektiöses Probenmaterial unkontrolliert im dem automatischen Analysegerät abgegeben wird und dieses kontaminiert was, zu Gesundheitsgefährdungen von Personal, das den Analyzer bedient, führen oder Messergebnisse von Proben verfälschen kann. Weiter können Positionsfehler zu unbeabsichtigten Kollisionen von Bauteilen innerhalb des Analysegeräts führen, welche Beschädigungen oder Fehlfunktionen hervorrufen können.

Es ist daher Aufgabe der Erfindung ein Riemenspannersystem zur Verfügung zu stellen, welches einen zuverlässigeren Betrieb eines Riemenantriebs ermöglicht, insbesondere bei schnelleren, unterschiedlichen Last- und/oder Richtungswechseln, wie sie in einem automatischen Analysegerät vorkommen können.

### Diese Aufgabe wird erfindungsgemäß durch die im Folgenden beschriebenen Gegenstände und Verfahren gelöst.

Die Erfindung geht dabei von der Überlegung aus, dass ein speziell konfiguriertes, dynamisches Riemenspannersystem auf die unterschiedliche Dehnung des Riemens reagieren kann und so sichergestellt werden kann, dass der Riemen auch bei schnelleren, unterschiedlichen Last- und/oder Richtungswechseln nicht überspringt oder durchrutscht.

Ein weiterer Gedanke der Erfindung ist, dass durch den Einsatz des dynamischen Riemenspannersystems die Umschlingungswinkel auch bei Richtungswechseln konstant bleiben und so Hysterese-Effekte auch bei vielfach wiederholten Richtungswechseln vermieden werden können.

Gegenstand der vorliegenden Erfindung ist ein Riemenspannersystem umfassend eine erste Spannrolle, eine zweite Spannrolle, ein Verbindungselement und zwei Hebel. Die erste und die zweite Spannrolle sind jeweils um eine Achse drehbar gelagert, wobei die Achsen jeweils mit einem der Hebel in Verbindung stehen und die Hebel jeweils um einen Befestigungspunkt schwenkbar sind. Die Hebel sind über das Verbindungselement miteinander verbunden.

Dies hat den Vorteil, dass das Riemenspannersystem für Riemenantriebe umfassend ein Antriebsrad und ein Abtriebsrad, über die ein Riemen geführt werden kann, unabhängig von den Durchmessern des Antriebsrades und des Abtriebsrad geeignet ist. Insbesondere ist das Riemenspannersystem auch für Riemenantriebe geeignet, bei denen das Antriebsrad und das Abtriebsrad gleiche Durchmesser aufweisen. Ein weiterer Vorteil des erfindungsgemäßen Riemenspannersystems ist, dass dessen Betrieb wartungsfrei ist. Außerdem wird zum Spannen des Riemens in einem Riemenantrieb, der mit einem erfindungsgemäßen Riemenspannersystem zum Spannen des Riemens ausgestattet ist, kein Werkzeug benötigt.

Ein weiterer Vorteil des erfindungsgemäßen Riemenspannersystems ist, dass es auch bei zueinander verdrehter Antriebswelle des Antriebsrades und Abtriebswelle des Abtriebsrades eingesetzt werden kann. Die Verdrehung kann dabei bis zu 120 Grad betragen.

Vorteilhafterweise sind einzelne oder alle Komponenten des erfindungsgemäßen Riemenspannersystems als Kunststoffspritzteile gefertigt. Dies kann eine besonders einfache Fertigung ermöglichen.

In einer bevorzugten Ausführung umfasst das erfindungsgemäße Riemenspannersystem einen Dämpfer. Der Dämpfer ist so ausgelegt, dass er Schwingungen des Verbindungselements vermindert oder vollständig unterdrückt. Dies hat den Vorteil, dass auch bei zahlreichen raschen Richtungswechseln das Verbindungselement nicht übermäßig in Schwingung versetzt wird. Dies ist auch besonders dann von Bedeutung, wenn das Verbindungselement eine Feder umfasst oder aus einer Feder besteht.

In einer vorteilhaften Ausführung ist das erfindungsgemäße Riemenspannersystem für die Verwendung in einem automatischen Analysegerät geeignet, insbesondere für Analysegeräte, die zur automatisierten in-vitro Analyse von Körperflüssigkeiten im klinischen Zusammenhang eingesetzte werden.

In einer vorteilhaften Ausgestaltung des Riemenspannersystems ist das Verbindungselement rückstellend ausgestaltet. Dies hat den Vorteil, dass die Umschlingungswinkel auch bei Richtungswechseln weitgehend konstant bleiben und so Hysterese-Effekte auch bei vielfach wiederholten Richtungswechseln vermieden werden können.

In einer weiteren vorteilhaften Ausgestaltung des Riemenspannersystems umfasst das Verbindungselement eine Feder, bevorzugt eine Zugfeder und/oder Spiralfeder. Dies hat den Vorteil, dass das Verbindungselement besonders einfach rückstellend ausgestaltet werden kann.

In einer weiteren vorteilhaften Ausgestaltung des Riemenspannersystems sind die Achse der ersten und/oder zweiten Spannrolle und der Befestigungspunkt des jeweiligen Hebels, mit dem die Achse in Verbindung steht, räumlich getrennt. Dies hat den Vorteil, dass die erste und/oder die zweite Spannrolle bei einer Drehung des Hebels um den Befestigungspunkt entsprechend weiter ausgelenkt werden und die Riemenspannung so stärker beeinflusst wird.

In einer weiteren vorteilhaften Ausgestaltung des Riemenspannersystems beträgt die räumliche Trennung wenigstens einen Durchmesser der ersten Spannrolle oder der zweiten Spannrolle. Dies hat den Vorteil, dass die Auslenkung der Spannrolle und damit die Beeinflussung der Riemenspannung entsprechend groß sind.

In einer weiteren vorteilhaften Ausgestaltung des Riemenspannersystems weisen die erste und die zweite Spannrolle gleiche Durchmesser auf. Dies hat den Vorteil, dass ein symmetrischer Aufbau des Riemenspannersystems möglich ist.

In einer weiteren vorteilhaften Ausgestaltung des Riemenspannersystems ist das Riemenspannersystem für einen Riemenantrieb in einem automatischen Analysegerät geeignet.

Ein weiterer Gegenstand der Erfindung ist ein Riemenantrieb umfassend ein erfindungsgemäßes Riemenspannersystem. Der Riemenantrieb umfasst ein Antriebsrad und ein Abtriebsrad, über die ein Riemen führbar ist, wobei das Antriebsrad und das Abtriebsrad im Betriebszustand den Riemen in ein ziehendes und ein loses Trum unterteilen.
Das Riemenspannersytem umfasst eine erste Spannrolle, eine zweite Spannrolle und ein Verbindungselement,

wobei die erste und die zweite Spannrolle jeweils um eine Achse drehbar gelagert sind, wobei die Achsen jeweils mit einem Hebel in Verbindung stehen und die Hebel jeweils um einen Befestigungspunkt schwenkbar sind.
Die erste Spannrolle kann mit dem Riemen im Bereich des ziehenden Trums und die zweite Spannrolle mit dem Riemen im Bereich des losen Trums in Kontakt gebracht werden, wobei die Hebel über das Verbindungselement miteinander verbunden sind. Die erste Spannrolle kann eine erste Kraft auf das ziehenden Trum und die zweite Spannrolle eine zweite Kraft auf das lose Trum des Riemens ausüben, wobei die Kräfte über das Verbindungselement, die Hebel und die Achsen vermittelt werden. Bevorzugt unterscheiden sich die Durchmesser des Antriebsrads und des Abtriebsrads um wenigstens einen Faktor zwei.

Die erste Spannrolle orientiert sich an der belasteten Seite des Riemens, und durch das Verbindungselement wird die zweite Spannrolle auf der entlasteten Seite mitgezogen. Dadurch wird die entlastete Seite des Riemens zwischen das Antriebsrad und das Abtriebsrad gezogen. Dies bewirkt, dass ein Umschlingungswinkel des Riemens um das Antriebsrad und ein Umschlingungswinkel um das Abtriebsrad stets konstant bleiben. Dies gilt auch bei einem Richtungswechsel des Drehsinns des Antriebsrads und des Abtriebsrads. Durch die konstant bleibenden Umschlingungswinkel ist eine zuverlässige und sichere Übertragung des Drehmoments vom Antriebsrad auf das Abtriebsrad gewährleistet.

In einer weiteren bevorzugten Ausführungsform des Riemenantriebs ist das Verbindungselement zwischen dem Antriebsrad und dem Abtriebsrad angeordnet.

In einer weiteren bevorzugten Ausführungsform des Riemenantriebs ist die erste und/oder zweite Kraft senkrecht zum Verlauf des Riemens im Bereich der ersten und/oder zweiten Spannrolle gerichtet. Dies hat den Vorteil, dass die Kräfte zur Regulierung der Riemenspannung besonders zuverlässig von den Spannrollen auf den Riemen übertragen werden können. Weiter hat dies den Vorteil, dass der Verschleiß des Riemens gleichmäßiger über die Breite des Riemens verteilt auftritt und insgesamt minimiert wird.

In einer weiteren bevorzugten Ausführungsform des Riemenantriebs ist der Riemen als endloser Riemen ausgestaltet. Dies hat den Vorteil, dass der Riemenantrieb beliebig lange in einer Richtung betrieben werden kann. In einer anderen Ausführungsform kann jedoch auch ein nicht endloser Riemen zum Einsatz kommen.

In einer weiteren bevorzugten Ausführungsform des Riemenantriebs umfasst der Riemen eine Kette oder der Riemen ist durch eine Kette ersetzt. Dies hat den Vorteil, dass der Riemen im Bereich der Kette oder die Kette einen geringeren Verschleiß aufweisen und z.B. eine geringere Gefahr des Reißens besteht, verglichen mit einem Riemen oder einem Riemen ohne Ketten.

In einer weiteren bevorzugten Ausführungsform des Riemenantriebs weist das Antriebsrad und das Abtriebsrad einen festen Achsabstand auf. Dies hat den Vorteil, dass die Lagerung der Achsen des Antriebsrads und des Abtriebsrads besonders einfach ausgeführt werden können.

Eine weiterer Gegenstand der Erfindung ist ein Riemenantrieb umfassend ein Antriebsrad und ein Abtriebsrad, über die ein Riemen geführt ist, und ferner umfassend ein erfindungsgemäßes Riemenspannersystem.

Ein weiterer Gegenstand der Erfindung ist ein Verfahren zum Betrieb eines automatischen Analysegeräts, wobei das automatische Analysegerät einen erfindungsgemäßen Riemenantrieb umfasst, und wobei der Riemenantrieb einen Riemen umfasst, der in Kontakt steht mit einer Transportvorrichtung für eine Küvette oder ein Reagenzgefäß oder einer Pipettiervorrichtung, und wobei der Riemen über das Antriebsrad und das Abtriebsrad des Riemenantriebs geführt ist, und wobei das Antriebsrad und das Abtriebsrad den Riemen in ein ziehendes und ein loses Trum unterteilen, und wobei die erste Spannrolle mit dem Riemen im Bereich des ziehende Trums und die zweiten Spannrolle mit dem Riemen im Bereich des losen Trums in Kontakt sind, und wobei eine erste Kraft auf das ziehende Trum des Riemens mittels der ersten Spannrolle ausgeübt wird und/oder eine zweiten Kraft auf das losen Trum des Riemens mittels der zweiten Spannrolle ausgeübt wird, wobei die Kräfte über das Verbindungselement, die Hebel und die Achsen vermittelt werden, das Verfahren aufweisend die Schritte:
a) Ingangsetzen des Antriebsrades,
b) Verfahren der Küvette oder des Reagenzgefäßes oder der Pipettiervorrichtung in dem automatischen Analysegerät durch Bewegen des Riemens aufgrund einer Drehbewegung des Antriebsrades.

Bevorzugt wird die Küvette oder das Reagenzgefäßes oder die Pipettiervorrichtung in Schritt b) entlang eines Weges des Riemens verfahren. Bevorzugt ist die Pipettiervorrichtung Teil eines automatischen Pipettiersystems und ist zum Pipettieren von Reagenzien oder Körperflüssigkeitsproben vorgesehen.

In einer anderen vorteilhaften Ausgestaltung eines Verfahrens zum Betrieb eines automatischen Analysegeräts umfasst das automatische Analysegerät einen erfindungsgemäßen Riemenantrieb und eine rotatorische Transportvorrichtung für eine Küvette oder ein Reagenzgefäß oder eine Pipettiervorrichtung, die mittels des Riemenantriebs bewegbar ist und die eine Welle umfasst. Die rotatorische Transportvorrichtung ist drehbar, bevorzugt rotierbar um die Welle. Bevorzugt weist die Transportvorrichtung die Form einer Kreisscheibe auf. Eine Drehung der rotatorischen Transportvorrichtung erfolgt über die Welle, die mit dem Abtriebsrad des Riemenantriebs verbunden ist. Eine Drehung des Antriebsrades bewirkt mittels des Riemens eine Drehung des Abtriebsrades und somit eine Drehung der rotatorischen Transportvorrichtung.

In einer weiteren vorteilhaften Ausgestaltung des erfindungsgemäßen Verfahrens enthält die Küvette und/oder das Reagenzgefäß und/oder die Pipettiervorrichtung Flüssigkeit, bevorzugt eine Körperflüssigkeit oder Bestandteile einer Körperflüssigkeit, bevorzugt Blut.

Ein weiterer Gegenstand der Erfindung ist ein automatisches Analysegerät umfassend ein erfindungsgemäßes Riemenspannersystem oder einen erfindungsgemäßen Riemenantrieb, wobei der Riemenantrieb einen Riemen umfasst, der in Kontakt steht mit einer Transportvorrichtung für eine Küvette oder ein Reagenzgefäß oder einer Pipettiervorrichtung, und wobei die Küvette oder das Reagenzgefäß oder die Pipettiervorrichtung in dem automatischem Analysegerät durch Bewegen des Riemens automatisch verfahren werden können.

In einer bevorzugten Ausführungsform des automatischen Analysegeräts umfasst das automatische Analysegerät eine Vielzahl von Aufnahmepositionen für jeweils eine Küvette oder ein Reagenzgefäß und/oder mindestens eine weitere automatisch verfahrbare Pipettiervorrichtung. Weiter umfasst das automatische Analysegerät bevorzugt einen oder mehrere robotisch verfahrbare und/oder robotisch schwenkbare Transferarme, die wenigstens teilweise mittels eines erfindungsgemäßen Riemenantriebs bewegt werden können.

In weiterer vorteilhafter Ausgestaltung umfasst das Analysegerät eine Messeinrichtung mit einem Photometer, die eine photometrische Untersuchung einer Probe ermöglicht.

Der Begriff "photometrische Untersuchung", wie vorliegend verwendet, bezieht sich auf Absorptions-, Reflektions-, Beugungs-, Fluoreszenz-, Phosphoreszenz-, Chemilumineszenz- und/oder Streuungsmessungen mit elektromagnetischen Wellen. Hier ist zunächst an elektromagnetische Wellen des sichtbaren Spektrums gedacht (zwischen etwa 350 nm und etwa 750 nm Wellenlänge), jedoch auch an Wellen im Infrarot- (IR-) Bereich (zwischen etwa 750 nm und etwa 1 mm Wellenlänge) und im Ultraviolett- (UV-) Bereich (zwischen etwa 350 nm und etwa 50 nm Wellenlänge).

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

### Die Erfindung wird anhand von Zeichnungen exemplarisch näher erläutert. Darin zeigen:

FIG. 1 ein erfindungsgemäßes automatisches Analysegerät (3),
FIG. 2 und 3 eine schematische Darstellung eines erfindungsgemäßen Riemenantriebs (1) mit einem Riemenspannersystem (2).

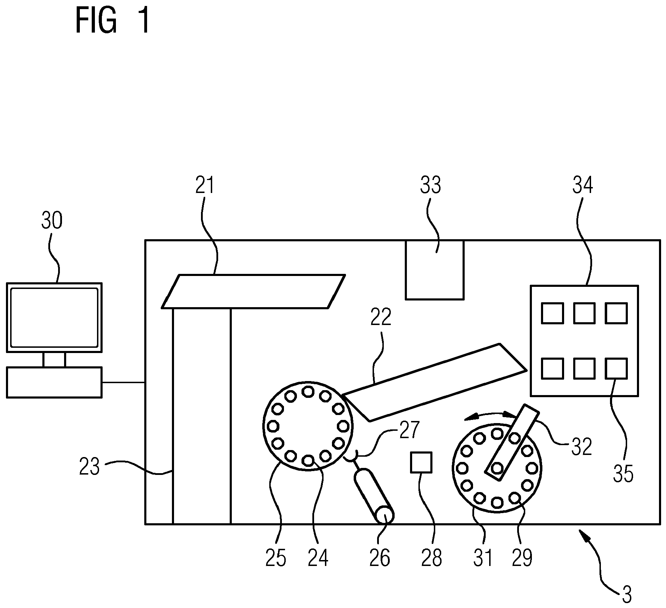

FIG. 1 zeigt eine schematische Darstellung eines automatischen Analysegeräts (3) mit einigen darin enthaltenen Bauteilen. Hierbei werden nur die wichtigsten Bauteile stark vereinfacht dargestellt, um die grundsätzliche Funktion des automatischen Analysegeräts (3) zu erläutern, ohne hierbei detailliert die einzelnen Teile jedes Bauteils darzustellen.

Das automatische Analysegerät (3) ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät (3) in Primärprobengefäßen auf nicht näher dargestellten Schlitten über eine Zuführungsschiene (23) zugeführt. Informationen hinsichtlich der pro Probe durchzuführenden Analysen können beispielsweise mittels auf den Probengefäßen angebrachten Strichcodes übergeben werden, die in dem automatischen Analysegerät (3) ausgelesen werden. Aus den Probengefäßen werden mit Hilfe eines ersten Pipettiersystems (21) Probenaliquots mittels einer Pipettiernadel entnommen.

Die Probenaliquots werden ebenfalls nicht näher dargestellten Küvetten zugeführt, die in Aufnahmepositionen (24) einer drehbaren, auf 37 °C temperierten Inkubationseinrichtung (25) angeordnet sind. Die Küvetten werden aus einem Küvettenvorratsbehälter (33) entnommen, in dem die Küvetten ungeordnet als Schüttgut vorliegen. Erst bei der Entnahme einer einzelnen Küvette und der Platzierung der Küvette in eine Aufnahmeposition (24) wird für diese Küvette ein Datensatz erstellt, der zunächst die Information, dass es sich um eine Küvette handelt und in welcher Aufnahmeposition (24) sie platziert ist, enthält. In dem auf ca. 8-10 °C gekühlten Reagenzgefäßvorratsbehälter (34) werden Reagenzgefäße (35) mit verschiedenen Reagenzflüssigkeiten aufbewahrt. Reagenzflüssigkeit wird mittels der Pipettiernadel eines zweiten Pipettiersystems (22) aus einem Reagenzgefäß (34) entnommen und zur Bereitstellung eines Reaktionsansatzes in eine Küvette, die bereits ein Probenaliquot enthält, abgegeben. Die Küvette mit dem Reaktionsansatz wird von dem Transferarm (26) mit einem Greifer (27) aus einer Aufnahmeposition (24) der Inkubationseinrichtung (25) entnommen und zum Durchmischen des Reaktionsansatzes zu einer Schütteleinrichtung (28) transferiert. Nach Beendigung des Mischvorgangs wird die Küvette weiter in eine Aufnahmeposition (29) der Aufnahmevorrichtung (31) für eine Messeinrichtung, die ein Photometer (32) zur photometrischen Untersuchung der Probe umfasst, transportiert, wo die Extinktion des Reaktionsansatzes gemessen wird. Das Photometer (32) ist dabei in mindestens eine der beiden Richtungen der dargestellten Pfeile um eine Achse, die mittig bezüglich der Aufnahmevorrichtung (31) angeordnet ist, drehbar oder bevorzugt rotierbar ausgestaltet.

Der gesamte Prozess wird von einer Steuereinheit (30), wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts (3) und seiner Bauteile. Die Steuereinheit (30) umfasst dabei ein Steuergerät, kann jedoch in weiteren Ausführungen auch zwei oder mehr Steuergeräte umfassen.

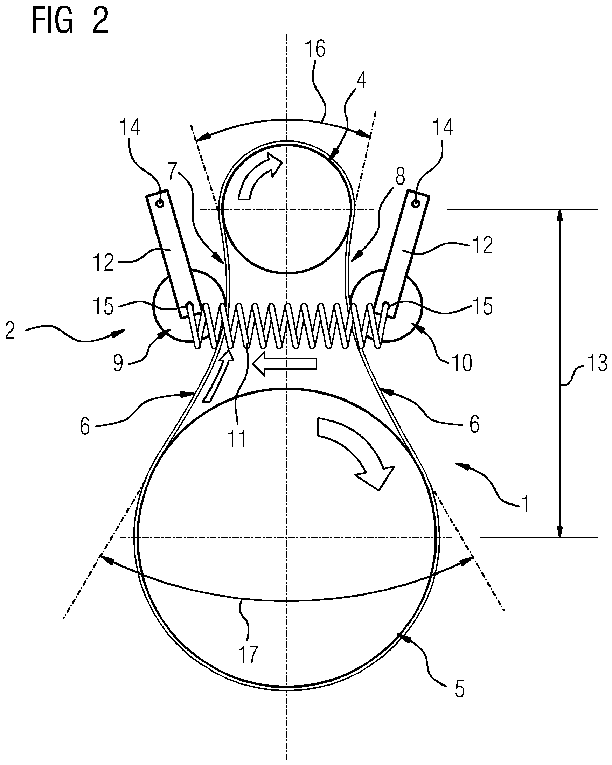

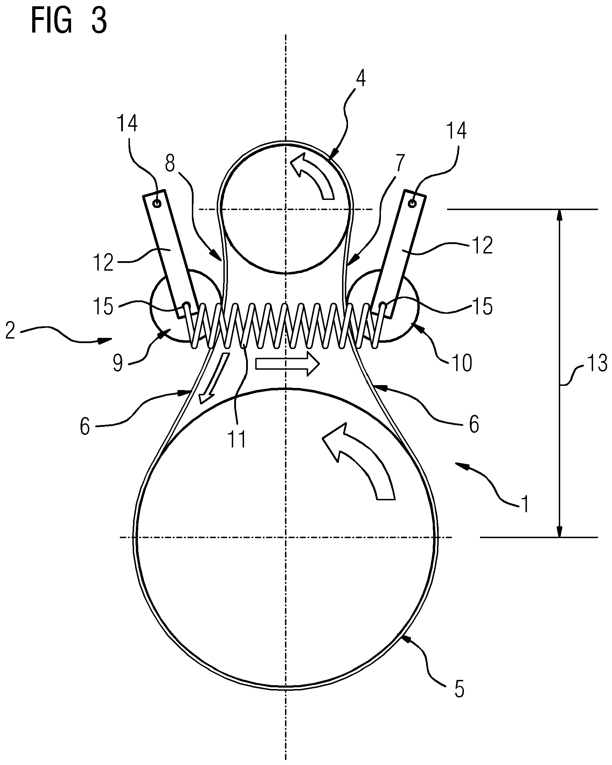

Die Pipettiersysteme (21, 22) umfassen jeweils einen Riemenantrieb (1) mit einem Riemenspannersystem (2), die in den FIG. 2 und 3 näher beschrieben sind. Die Riemenantriebe (1) umfassen jeweils einen Riemen (6), der in Kontakt steht mit einer Pipettiervorrichtung, die Teil des jeweiligen Pipettiersystemes (21, 22) ist.

Der in FIG. 2 schematisch als Schnittzeichnung dargestellte Riemenantrieb (1) mit einem Riemenspannersystem (2) ist zur Verfahrung einer Pipettiervorrichtung in einem automatischen Analysegerät (3), wie beispielhaft in FIG. 1 dargestellt, ausgebildet und ist Teil eines Pipettiersystemes (21, 22).

Das Riemenspannersystem (2) umfasst eine erste Spannrolle (9), eine zweite Spannrolle (10), ein Verbindungselement (11) und zwei Hebel, wobei die erste und die zweite Spannrolle (9, 10) jeweils um eine Achse (15) drehbar gelagert sind, wobei die Achsen (15) jeweils mit einem der Hebel (12) in Verbindung stehen und die Hebel (12) jeweils um einen Befestigungspunkt (14) schwenkbar sind. Die Hebel (12) sind über das Verbindungselement (11) miteinander verbunden. Das Verbindungselement (11) ist rückstellend ausgestaltet und umfasst eine Zugfeder, die als Spiralfeder ausgestaltet ist.

Die Achse (15) der ersten und/oder zweiten Spannrolle (9, 10) und der Befestigungspunkt (14) des jeweiligen Hebels (12), mit dem die Achse (15) in Verbindung steht, sind räumlich getrennt. Die räumliche Trennung beträgt einen Durchmesser der ersten Spannrolle (4) bzw. der zweiten Spannrolle (5). Die erste und die zweite Spannrolle (9, 10) weisen gleiche Durchmesser auf. Mittels der Befestigungspunkte (14) sind die Hebel (12) an einem Rahmen des Gehäuses des Analysegeräts befestigt.

Der Riemenantrieb (1) umfasst ein Antriebsrad (4) und ein Abtriebsrad (5), über die ein Riemen (6) geführt ist, und wobei das Antriebsrad (4) und das Abtriebsrad (5) im Betrieb (bei Drehung des Antriebsrads (4) und des Abtriebsrads (5) im Uhrzeigersinn, wie durch Pfeilrichtung angedeutet) des Riemenantriebs (1) den Riemen (6) in ein ziehendes (7) und ein loses (8) Trum unterteilen. Die belastete Seite des Riemens (6), auch als ziehendes (7) Trum bezeichnet, überträgt ein Drehmoment von dem Antriebsrad (4) auf das Abtriebsrad (5). Da der Riemen (6) endlos ist, ist er auf der belasteten Seite straffer geführt als auf der entlasteten Seite, die auch als loses (8) Trum bezeichnet wird.

Die erste Spannrolle (9) ist mit dem Riemen (6) im Bereich des ziehenden Trums (7) und die zweite Spannrolle (10) mit dem Riemen (6) im Bereich des losen Trums (8) in Kontakt gebracht. Die Hebel (12) sind über das Verbindungselement (11) miteinander verbunden. Die erste Spannrolle (9) übt eine erste Kraft auf das ziehende Trum (7) und die zweite Spannrolle (10) eine zweite Kraft auf das lose Trum (8) des Riemens (6) aus, wobei die Kräfte über das Verbindungselement (11), die Hebel (12) und die Achsen (15) vermittelt werden.

Die erste Spannrolle (9) orientiert sich an der belasteten Seite des Riemens (6), und durch das Verbindungselement (11) wird die zweite Spannrolle (10) auf der entlasteten Seite mitgezogen, wie durch einen Pfeil angedeutet. Dadurch wird die entlastete Seite des Riemens (6) zwischen das Antriebsrad (4) und das Abtriebsrad (5) gezogen. Dies bewirkt, dass der Umschlingungswinkel (16) am Antriebsrad (4) und der Umschlingungswinkel (17) am Abtriebsrad (5) stets konstant bleiben. Dies gilt auch bei einem Richtungswechsel des Drehsinns des Antriebsrads (4) und des Abtriebsrads (5) in die entgegengesetzt Richtung, wie in FIG. 3 dargestellt.

Das Verbindungselement (11) ist zwischen dem Antriebsrad (4) und dem Abtriebsrad (5) angeordnet. Die erste und/oder zweite Kraft ist senkrecht zum Verlauf des Riemens (6) im Bereich der ersten (9) und/oder zweiten (10) Spannrolle gerichtet. Das Antriebsrad (4) und das Abtriebsrad (5) weisen einen festen Achsabstand (13) auf.

Die Durchmesser des Antriebsrads (4) und des Abtriebsrads (5) unterscheiden sich um etwa einen Faktor zwei.

In FIG. 3 ist der Riemenantrieb (1) mit dem Riemenspannersystem (2) aus FIG. 2 dargestellt. Der Drehsinn des Antriebsrads (4) und des Abtriebsrads (5) (Drehung des Antriebsrads (4) und das Abtriebsrads (5) gegen den Uhrzeigersinn, wie durch Pfeilrichtung angedeutet) ist nun entgegengesetzt zum Drehsinn, der in FIG. 2 dargestellt ist. Entsprechend ist wieder der Riemen (6) in ein ziehendes (7) und ein loses (8) Trum unterteilt.

Die zweite Spannrolle (10) übt nun eine zweite Kraft auf das ziehenden Trum (7) und die erste Spannrolle (9) eine erste Kraft auf das lose Trum (8) des Riemens (6) aus.

Die zweite Spannrolle (9) orientiert sich an der belasteten Seite des Riemens (6), und durch das Verbindungselement (11) wird die erste Spannrolle (10) auf der entlasteten Seite mitgezogen, wie durch einen Pfeil angedeutet. Dadurch wird die entlastete Seite des Riemens (6) zwischen das Antriebsrad (4) und das Abtriebsrad (5) gezogen. Dies bewirkt, dass der Umschlingungswinkel (16) Antriebsrad (4) und der Umschlingungswinkel (17) Abtriebsrad (5)stets konstant bleiben, insbesondere auch während und nach einem Richtungswechsel des Drehsinns des Antriebsrads (4) und des Abtriebsrads (5). Durch die konstant bleibenden Umschlingungswinkel (16, 17) ist eine zuverlässige und sichere Übertragung des Drehmoments vom Antriebsrad (4) auf das Abtriebsrad (5) gewährleistet.

### Bezugszeichenliste

- 1: Riemenantrieb
- 2: Riemenspannersystem
- 3: Analysegerät
- 4: Antriebsrad
- 5: Abtriebsrad
- 6: Riemen
- 7: ziehendes Trum
- 8: loses Trum
- 9: erste Spannrolle
- 10: zweite Spannrolle
- 11: Verbindungselement
- 12: Hebel
- 13: Achsabstand
- 14: Befestigungspunkt
- 15: Achse
- 16: Umschlingungswinkel Antriebsrad
- 17: Umschlingungswinkel Abtriebsrad
- 21: erstes Pipettiersystem
- 22: zweites Pipettiersystem
- 23: Zuführungsschiene
- 24: Aufnahmeposition
- 25: Inkubationseinrichtung
- 26: Transferarm
- 27: Greifer
- 28: Schütteleinrichtung
- 29: Aufnahmeposition
- 30: Steuereinheit
- 31: Aufnahmevorrichtung
- 32: Photometer
- 33: Küvettenvorratsbehälter
- 34: Reagenzgefäßvorratsbehälter
- 35: Reagenzgefäß

## Patentansprüche

1. Riemenspannersystem (2)
umfassend eine erste Spannrolle (9), eine zweite Spannrolle (10), ein Verbindungselement (11) und zwei Hebel,
wobei die erste und die zweite Spannrolle (9, 10) jeweils um eine Achse (15) drehbar gelagert sind, wobei die Achsen (15) jeweils mit einem der Hebel (12) in Verbindung stehen und die Hebel (12) jeweils um einen Befestigungspunkt (14) schwenkbar sind,
und wobei die Hebel (12) über das Verbindungselement (11) miteinander verbunden sind.

2. Riemenspannersystem (2) nach Anspruch 1, wobei das Verbindungselement (11) rückstellend ausgestaltet ist.

3. Riemenspannersystem (2) nach Anspruch 2, wobei das Verbindungselement (11) eine Feder, bevorzugt eine Zugfeder und/oder Spiralfeder, umfasst.

4. Riemenspannersystem (2) nach einem der vorhergehenden Ansprüche, wobei die Achse (15) der ersten und/oder zweiten Spannrolle (9, 10) und der Befestigungspunkt (14) des jeweiligen Hebels (12), mit dem die Achse (15) in Verbindung steht, räumlich getrennt sind.

5. Riemenspannersystem (2) nach Anspruch 4, wobei die räumliche Trennung wenigstens einen Durchmesser der ersten Spannrolle (4) oder der zweiten Spannrolle (5) beträgt.

6. Riemenspannersystem (2) nach einem der vorhergehenden Ansprüche, wobei die erste und die zweite Spannrolle (9, 10) gleiche Durchmesser aufweisen.

7. Riemenantrieb (1) umfassend ein Riemenspannersystem (2) nach einem der vorhergehenden Ansprüche,
der Riemenantrieb (1) umfassend ein Antriebsrad (4) und ein Abtriebsrad (5), über die ein Riemen (6) führbar ist, und wobei das Antriebsrad (4) und das Abtriebsrad (5) im Betriebszustand den Riemen (6) in ein ziehendes (7) und ein loses (8) Trum unterteilen,
das Riemenspannersystem (2) umfassend eine erste Spannrolle (9), eine zweite Spannrolle (10) und ein Verbindungselement (11),
wobei die erste und die zweite Spannrolle (9, 10) jeweils um eine Achse (15) drehbar gelagert sind, wobei die Achsen (15) jeweils mit einem Hebel (12) in Verbindung stehen und die Hebel (12) jeweils um einen Befestigungspunkt (14) schwenkbar sind,
und wobei die erste Spannrolle (9) mit dem Riemen (6) im Bereich des ziehenden Trums (7) und die zweite Spannrolle (10) mit dem Riemen (6) im Bereich des losen Trums (8) in Kontakt gebracht werden kann,
und wobei die Hebel (12) über das Verbindungselement (11) miteinander verbunden sind,
und wobei die erste Spannrolle (9) eine erste Kraft auf das ziehenden Trum (7) und die zweite Spannrolle (10) eine zweite Kraft auf das losen Trum (8) des Riemens (6) ausüben können, wobei die Kräfte über das Verbindungselement (11), die Hebel (12) und die Achsen (15) vermittelt werden.

8. Riemenantrieb (1) nach Anspruch 7, wobei das Verbindungselement (11) zwischen dem Antriebsrad (4) und dem Abtriebsrad (5) angeordnet ist.

9. Riemenantrieb (1) nach einem der Ansprüche 7 oder 8, wobei die erste und/oder zweite Kraft senkrecht zum Verlauf des Riemens (6) im Bereich der ersten (9) und/oder zweiten (10) Spannrolle gerichtet ist.

10. Riemenantrieb (1) nach einem der Ansprüche 7 bis 9, wobei der Riemen (6) als endloser Riemen (6) ausgestaltet ist.

11. Riemenantrieb (1) nach einem der Ansprüche 7 bis 10, wobei der Riemen (6) eine Kette ist.

12. Riemenantrieb (1) nach einem der Ansprüche 7 bis 11, wobei das Antriebsrad (4) und das Abtriebsrad (5) einen festen Achsabstand (13) aufweisen.

13. Riemenantrieb (1) umfassend ein Antriebsrad (4) und ein Abtriebsrad (5), über die ein Riemen (6) geführt ist, und ferner umfassend ein Riemenspannersystem (2) gemäß einem der Ansprüche 1 bis 6.

14. Riemenantrieb (1) gemäß Anspruch 13, wobei das Antriebsrad (4) und das Abtriebsrad (5) im Betrieb des Riemenantriebs (1) den Riemen (6) in ein ziehendes (7) und ein loses (8) Trum unterteilen und
wobei sich die Durchmesser des Antriebsrads (4) und des Abtriebsrads (5) um wenigstens einen Faktor zwei unterscheiden.

15. Verfahren zum Betrieb eines automatischen Analysegeräts (3), wobei das automatische Analysegerät (3) einen Riemenantrieb (1) nach einem der Ansprüche 13 oder 14 umfasst, und wobei der Riemenantrieb (1) einen Riemen umfasst, der in Kontakt steht mit einer Transportvorrichtung für eine Küvette oder ein Reagenzgefäß oder einer Pipettiervorrichtung, und wobei der Riemen (6) über das Antriebsrad (4) und das Abtriebsrad (5) des Riemenantriebs (1) geführt ist, und wobei das Antriebsrad (4) und das Abtriebsrad (5) den Riemen (6) in ein ziehendes (7) und ein loses (8) Trum unterteilen, und wobei die erste Spannrolle (9) mit dem Riemen (6) im Bereich des ziehende Trums (7) und die zweiten Spannrolle (10) mit dem Riemen (6) im Bereich des losen Trums (8) in Kontakt sind, und wobei eine erste Kraft auf das ziehende Trum des Riemens (6) mittels der ersten Spannrolle (9) ausgeübt wird und/oder eine zweiten Kraft auf das lose Trum (8) des Riemens (6) mittels der zweiten Spannrolle (10) ausgeübt wird, wobei die Kräfte über das Verbindungselement (11), die Hebel (12) und die Achsen (15) vermittelt werden, das Verfahren aufweisend die Schritte:
a) Ingangsetzen des Antriebsrades (4),
b) Verfahren der Küvette oder des Reagenzgefäßes oder der Pipettiervorrichtung in dem automatischen Analysegerät (3) durch Bewegen des Riemens aufgrund einer Drehbewegung des Antriebsrades (4).

16. Automatisches Analysegerät (3) umfassend einen Riemenantrieb (1) nach einem der Ansprüche 7 bis 14, wobei der Riemenantrieb (1) einen Riemen umfasst, der in Kontakt steht mit einer Transportvorrichtung für eine Küvette oder ein Reagenzgefäß oder einer Pipettiervorrichtung, und wobei die Küvette oder des Reagenzgefäße oder die Pipettiervorrichtung in dem automatischem Analysegerät (3) durch bewegen des Riemens automatisch verfahren werden kann.
